# EUROPEAN PATENT SPECIFICATION

(11) **EP 1 895 284 B1**
(45) Date of publication and mention of the grant of the patent: **01.02.2012**
(21) Application number: 07015021.4
(22) Date of filing: 31.07.2007
(51) Int. Cl.: G01L 3/14

(54) **Torque sensor**
Drehmomentsensor
Capteur de couple

(30) Priority: 28.08.2006 JP 2006230652
(43) Date of publication of application: 05.03.2008
(73) Proprietor: ALPS ELECTRIC CO., LTD., Tokyo 145-8501 (JP)
(72) Inventor: Okumura, Hirofumi, Tokyo 145-8501 (JP)
(74) Representative: Schmitt-Nilson, Gerhard

(56) References cited:
- DE-U1- 9 012 718
- JP-A- 60 006 838
- JP-A- 61 050 029
- US-A- 4 763 532
- US-A1- 2001 003 435

## Description

### BACKGROUND OF THE INVENTION

### 1. Field of the Invention

The present invention relates to a torque sensor, and in particular, to a torque sensor that detects the torques applied to an input shaft (first shaft), and an output shaft (second shaft), which are connected together via a torsion bar.

### 2. Description of the Related Art

Conventionally, magnetic projections are disposed in the input shaft and the output shaft, and a torque sensor that detects the torques applied to the input shaft and the output shaft, using an output difference between magnetic sensors (detecting elements) that responds to the magnetic projections, is suggested (for example, refer to JP-A-2001-324394). In this torque sensor, the torques applied to the input shaft and the output shaft are detected according to the angle of twist that is caused in a torsion bar that connects these shafts together.

However, in the conventional torque sensor as described above, a plurality of magnetic sensors (detecting elements) that respond to the magnetic projections of the input shaft and the output shaft should be disposed. Thus, there is a problem that it is difficult to reduce the cost required for manufacture.

JP 61050029 A discloses a transfer dynamometer to measure the small torque value through the large torque value, by measuring the axial thrust of the third or fourth gear on a spline shaft, and obtaining the transfer torque by converting said axial thrust. An input shaft is connected to the side of a prime mover of a machine, and an output shaft is connected to the side of a working machine. Power is transferred to the output shaft from the input shaft through a first gear, a third gear, a spline shaft, a fourth gear and a second gear. At this time, thrust in the axial direction is yielded in either of the third gear or the fourth gear. Said gear yields the axial thrust proportional to the transfer torque. Therefore the transfer torque can be obtained by measuring said axial thrust.

JP 60 006838 A discloses a torque meter which is configured to reduce a detection part in capacity and price by providing two couples of speed-up and reduction gears on an intermediate shaft coupled directly with the output shaft of a prime mover, putting a high-speed shaft in partial charge of power and torque, and utilizing the high-speed shaft as a torque meter. The driving shaft rotated by the output of the prime mover is supported by bearings, and two large gears having an equal first pitch radius, the same module, and the same number of teeth are fixed at an interval. Then, two small gears which have the same module, a second pitch radius, and a second number of teeth are provided meshing with said large gears, and coupled with the parallel high-speed shaft as the torque meter having a diameter and supported by bearings. An angle of torsion due to torque operating on the parallel high-speed shaft or a physical quantity proportional to strain is amplified and indicated electrically similarly to various torque meters. The power and torque of the driving shaft are transmitted to a load shaft through the shafts and and gears.

US 2001/003435 A1 shows an angle sensor in which, when a biasing member is used, a biasing force in a first direction acts on a driving gear, and a biasing force in a second direction acts on an auxiliary gear. This prevents backlash from occurring between a rotary member and the driving member, making it possible to reduce rattling between the rotary member and the driving member. A fitting member is provided at the free end side of a resilient supporting member in order to resiliently press a screw shaft in a third direction.

US 4 763 532 A shows a torque transducer which is constructed so as to be protected from an overload includes a measuring axle which extends through a housing and a take-up axle which also extends through the housing in parallel with the measuring axle. The portion of the measuring axle within the housing includes two spaced apart gear wheels which are respectively engaged with backlash with gear wheels on the take-up axle, the gear wheels on the measuring axle being larger in diameter than the gear wheels on the take-up axle. When the measuring axle is subjected to excessive torque, such that the portion thereof within the housing twists sufficiently, the gear wheels on the measuring axle will engage with the gear wheels on the take-up axle to transfer the excessive torque to the take-up axle.

DE 901 27 18 U1 shows a contactless measuring apparatus for measuring the torque and/or the angle of rotation of fixed or rotating shafts having two bodies which are fixed to the shaft and twistable with respect to each other, and a measuring system which determines the torque transmitted by the shaft and/or its angle of rotation from the relative position of the two bodies which changes with the twist angle. At least one further body is twisted or shifted via a gear having a predetermined transformation ratio with respect to at least a second body by the relative twist between the two bodies, which are torque proof mounted to the shaft.

### SUMMARY OF THE INVENTION

The invention has been made in view of this problem. The object of the invention is therefore to provide a torque sensor that can simply detect torque while the cost required for manufacture is reduced.

A torque sensor of the invention includes: an input shaft that is provided with an input gear; an output shaft that is connected with the input shaft and is provided with an output gear; a first pinion gear that meshes with the input gear; a second pinion gear that meshes with the output gear; and a helical gear extending from the second pinion gear. The first pinion gear is mounted on the helical gear and is slid according to a difference in the angle of rotation between the input shaft and the output shaft, and the torques applied to the input shaft and the output shaft are detected according to the amount of movement of the first pinion gear.

According to the above torque sensor, the first pinion gear is slid according to a difference in the angle of rotation between the input shaft and the output shaft, and the torques applied to the input shaft and the output shaft are detected according to the amount of movement of the first pinion gear. Therefore, the torques applied to the input shaft and the output shaft can be detected only by including the single detecting element that detects the amount of movement of the first pinion gear. Thus, torque can be simply detected while the cost required for manufacture can be reduced, compared with a conventional torque sensor that requires a plurality of detecting elements.

The above torque sensor further includes a rack extending from the first pinion gear, and a rotary body that is engaged with the rack and is rotated according to the sliding of the first pinion gear. Here, the torques may be detected according to the amount of rotation of the rotary body. In the case, the sliding of the first pinion gear is converted into the rotational motion of the rotary body, and the amount of rotation of the rotary body is detected so that the torques applied to the input shaft and the output shaft can be detected. Thus, the degree of freedom in the design of components of the torque sensor can be increased. This can contribute to miniaturization of the torque sensor.

For example, in the above torque sensor, the amount of rotation of the rotary body may be detected by assembling a magnet into the rotary body and detecting the rotation of the magnet. In this case, the amount of rotation of the rotary body can be detected by non-contact. Therefore, it is possible to provide the torque sensor that is excellent in durability compared with contact-type detecting elements.

Further, in the above torque sensor, it is preferable that the first pinion gear is biased in a constant direction. In this case, chattering of the first pinion gear that is biased in a constant direction to slide can be prevented. Therefore, it is possible to detect the torques applied to the input shaft and the output shaft with higher precision.

For example, in the above torque sensor, it is preferable that the first pinion gear is biased via the rack by the rotary body. In this case, since the first pinion gear is biased using the rotary body that converts the sliding of the first pinion gear into rotational motion. Therefore, the first pinion gear can be biased without newly adding a member that biases the first pinion gear. Thus, chattering of the first pinion gear that slides can be prevented while an increase in manufacturing cost can be suppressed.

According to the invention, it is possible to provide a torque sensor that can simply detect torque while the cost required for manufacture is reduced.

### BRIEF DESCRIPTION OF THE DRAWINGS

Fig. 1 is an enlarged view of principal parts showing the configuration of a torque sensor according to one embodiment of the invention;
Fig. 2 is a view when first and second pinion gears, a rotary body, and a circuit board that are possessed by the torque sensor according to the present embodiment are extracted; and
Fig. 3 is an enlarged view for explaining the relationship between the rotary body and a detecting element that are possessed by the torque sensor according to the above embodiment.

### DESCRIPTION OF THE PREFERRED EMBODIMENT

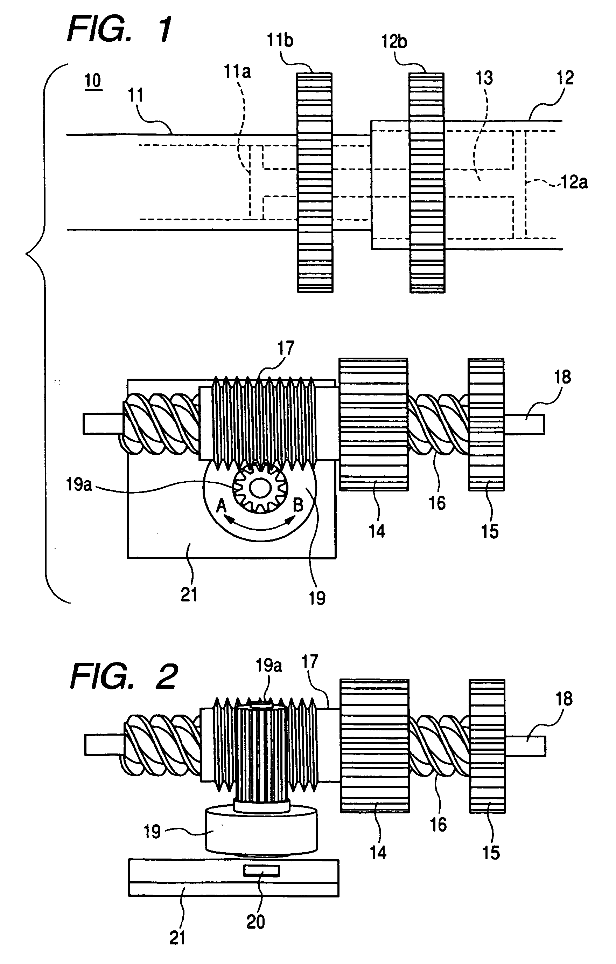

Hereinafter, one embodiment of the invention will be described in detail with reference to the accompanying drawings. Fig. 1 is an enlarged view of principal parts showing the configuration of a torque sensor according to one embodiment of the invention. Further, Fig. 2 is a view when first and second pinion gears, a rotary body, and a circuit board that are possessed by the torque sensor according to the present embodiment are extracted. In addition, Fig. 2 shows a case where the first and second pinion gears, the rotary body, and the circuit board shown in Fig. 1 are viewed from below.

In addition, the torque sensor according to the present embodiment is applied to, for example, an electric power steering apparatus that is mounted on an automobile, drives an electric motor to perform steering assistance, and alleviates a driver's burden. A case where the torque sensor according to the present embodiment is applied to electric power steering will be described below.

As shown in Fig. 1, the torque sensor 10 according to the present embodiment includes an input shaft 11 connected with a handle of an automobile, and an output shaft 12 connected with a steering mechanism of a tire. The input shaft 11 and the output shaft 12 are formed in a hollow shape, and a torsion bar 13 is disposed inside the input and output shafts. The torsion bar 13 has one end fixed to an inner wall of the input shaft 11 via a wall part 11a, and has the other end fixed to an inner wall of the output shaft 12 via a wall part 12a. Further, an input gear 11b is provided on an outer peripheral surface of the input shaft 11, and an output gear 12b is provided on an outer peripheral surface of the output shaft 12. In addition, the input gear 11b and the output gear 12b have the same number of teeth.

Further, the torque sensor 10 includes a first pinion gear 14 that meshes with the input gear 11b of the input shaft 11, and a second pinion gear 15 that meshes with an output gear 12b of the output shaft 12. In addition, the first pinion gear 14 and the second pinion gear 15 have the same number of teeth. The second pinion gear 15 is formed with a helical gear 16 that extends to the left shown in Fig. 1 from one side surface. The first pinion gear 14 is formed with a cylinder rack 17 that extends to the left shown in Fig. 1 from one side surface, and that is engaged with the helical gear 16 on its inner wall part. The second pinion gear 15 is rotatably attached to a shaft 18 supported by a housing to which the torque sensor 10 is fixed, and the first pinion gear 14 is rotatably attached to the helical gear 16 of the second pinion gear 15.

Furthermore, the torque sensor 10, as shown in Fig. 2, includes a rotary body 19 having a gear part 19a that meshes with the cylinder rack 17, and a circuit board 21 that is disposed so as to face the rotary body 19 at a fixed distance therefrom, and to which a detecting element 20 that detects rotation of the rotary body 19 is fixed. The rotary body 19, as shown in Fig. 2, has an axis of rotation in a direction orthogonal to the shaft 18, and rotates in the direction of an arrow A or an arrow B shown in Fig. 1 according to the sliding motion of the cylinder rack 17 as will be described below.

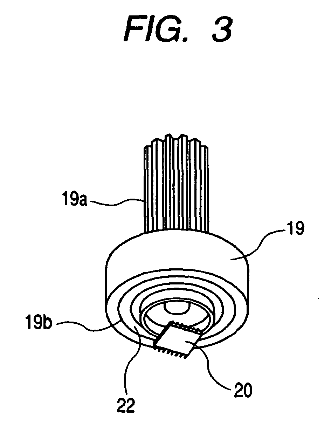

Here, the relationship between the rotary body 19 and the detecting element 20 will be described. Fig. 3 is an enlarged view for explaining the relationship between the rotary body 19 and the detecting element 20. In addition, in Fig. 3, the circuit board 21 to which the detecting element 20 is fixed is omitted, and the rotary body 19 and the detecting element 20 are shown from slightly below.

As shown in Fig. 3, a groove 19b is formed in the surface (lower surface shown in Fig. 3) of the rotary body 19 that faces the detecting element 20, and an annular magnet 22 is fixed to the groove 19b. In the present embodiment, the magnet 22 is magnetized by two poles including an N pole and an S pole.

The detecting element 20 includes, for example, a magnetoresistive effect element (GMR element) that exhibits a giant magnetoresistive effect, and is disposed in a position corresponding to a central part of the annular magnet 22. The torque sensor 10 makes an external magnetic field by the magnet 22 act on a magnetoresistive effect element. Also, the torque sensor changes the electric resistance value of the magnetoresistive effect element according to the direction of the external magnetic field by the magnet 22, and detects the amount of relative angle between the magnetoresistive effect element and the magnet 22 from an output signal of the magnetoresistive effect element. A computer that controls the torque sensor 10 detects the angle of rotation of the rotary body 19 on the basis of the above-mentioned relative angle amount detected by the torque sensor 10, so that the torque applied to the input shaft 11 and the output shaft 12 can be detected.

The magnetoresistive effect element (GMR element) that outputs an output signal in response to magnetism is formed by laminating, as its basic configuration, an exchange bias layer (antiferromagnetic layer), a fixed layer (pinned magnetic layer), a nonmagnetic layer, and a free layer (free magnetic layer) on a substrate, and is constituted as a magnetoresistive effect element that is a kind of a GMR (Giant Magnet Resistance) element using a giant magnetoresistive effect.

In addition, in order for the magnetoresistive effect element to exhibit a giant magnetoresistive effect, for example, it is preferable that the exchange bias layer is formed from an α-Fe 203 layer, the fixed layer is formed from an NiFe layer, the nonmagnetic layer is formed from a Cu layer, and the free layer is formed from an NiFe layer. However, the magnetoresistive effect element is not limited thereto. For example, any magnetoresistive effect element may be used as long as it exhibits a giant magnetoresistive effect. Further, the magnetoresistive effect element is not limited to a magnetoresistive effect element having the above laminated structure if it exhibits a giant magnetoresistive effect.

Next, the operation of the torque sensor 10 having the configuration as described above will be described referring to Fig. 1.

In the torque sensor 10 according to the present embodiment, when the input shaft 11 rotates according to driver's handle operation, torque is transmitted to the output shaft 12 via the torsion bar 13. At this time, the rotation of the input shaft 11 and the output shaft 12 is transmitted to the first pinion gear 14 and the second pinion gear 15 via the input gear 11b and the output gear 12b, respectively. Accordingly, the first pinion gear 14 and the second pinion gear 15 rotate on the shaft 18 according to the driver's handle operation.

In this case, if the angle of rotation of the input shaft 11 and the angle of rotation of the output shaft 12 are the same, the first pinion gear 14 and the second pinion gear 15 will rotate as a unit. Therefore, the first pinion gear 14 and the cylinder rack 17 do not slide on the helical gear 16. For this reason, the rotary body 19 does not rotate.

On the other hand, if the angle of rotation of the input shaft 11 and the angle of rotation of the output shaft 12 are different from each other, that is, if any twist occurs in the input shaft 11 and the output shaft 12, the first pinion gear 14 and the second pinion gear 15 will rotate independently according to the angle of rotation of the input shaft 11 and the angle of rotation of the output shaft 12, respectively. For this reason, according to a difference between such angles of rotation, the first pinion gear 14 and the cylinder rack 17 slides on the helical gear 16. When the cylinder rack 17 slides on the helical gear 16, the rotary body 19 will rotate accordingly. The detecting element 20 on the circuit board 21 detects the angle of rotation of the rotary body 19 to detect the torques applied to the input shaft 11 and the output shaft 12.

As described above, in the torque sensor 10 according to the present embodiment, a difference in the angle of rotation between the input shaft 11 and the output shaft 12 is converted into the amount of sliding of the first pinion gear 14 and the cylinder rack 17, and the angle of rotation of the rotary body 19 according to the amount of sliding whereby the torques applied to the input shaft 11 and the output shaft 12 are detected. In this case, prevention of chattering of the first pinion gear 14 and the cylinder rack 17 that slides on the helical gear 16 becomes an important challenge. For this reason, in the torque sensor 10 according to the present embodiment, a biasing member, such as a coiled spring, is disposed in the rotary body 19, and a fixed biasing force is given in the direction of an arrow A shown in Fig. 1. Sine this prevents chattering of the first pinion gear 14 and the cylinder rack 17, it is possible to detect the torques applied to the input shaft 11 and the output shaft 12 with higher precision. In addition, the configuration in which the chattering of the first pinion gear 14 and the cylinder rack 17 is prevented is not limited thereto, and can be suitably changed. For example, a biasing member that biases a left end face (shown in Fig. 1) of the cylinder rack 17 to the right may be included.

As described above, according to the torque sensor 10 according to the present embodiment, the first pinion gear 14 is slid made according to a difference in the angle of rotation between the input shaft 11 and the output shaft 12, and the torques applied to the input shaft 11 and the output shaft 12 according to the amount of movement of the first pinion gear 14. Therefore, the torques applied to the input shaft 11 and the output shaft 12 can be detected only by including the single detecting element 20 that detects the amount of movement of the first pinion gear 14. Thus, torque can be simply detected while the cost required for manufacture can be reduced, compared with a conventional torque sensor that requires a plurality of detecting elements.

Further, according to the torque sensor 10 according to the present embodiment, the cylinder rack 17 that extends from the first pinion gear 14, and the rotary body 19 that is engaged with the cylinder rack 17 and rotates according to the sliding of the first pinion gear 14 are provided so that torque may be detected according to the amount of rotation of the rotary body 19. This converts the sliding of the first pinion gear 14 into the rotational motion of the rotary body 19, and the amount of rotation of the rotary body 19 is detected so that the torques applied to the input shaft 11 and the output shaft 12 can be detected. Thus, the degree of freedom in the design of components of the torque sensor 10 can be increased. This can contribute to miniaturization of the torque sensor.

In particular, according to the torque sensor 10 according to the present embodiment, the magnet 22 is assembled into the rotary body 19, and the rotation of the rotary body 19 is detected so that the amount of rotation of the magnet 22 may be detected. This makes it possible to detect the amount of rotation of the rotary body 19 by non-contact. Therefore, it is possible to provide the torque sensor 10 that is excellent in durability compared with contact-type detecting elements.

In addition, the invention is not limited to the above embodiment, and various modifications thereof can be made. In the above embodiment, the size, shape, etc. shown in the accompanying drawings are not limited thereto, and the invention can be suitably changed within a range in which the effects of the invention are exhibited. In addition, the invention can be suitably changed without departing the scope of the object thereof.

For example, in the torque sensor 10 according to the above embodiment, the case where the torques applied to the input shaft 11 and the output shaft 12 are detected by detecting the amount of rotation of the rotary body 19 that rotates according to the sliding of the cylinder rack 17 extending from the first pinion gear 14 is shown. However, the invention is not limited thereto. If the sliding of the first pinion gear 14 can be detected, and the torques applied to the input shaft 11 and the output shaft 12 can be detected according to the amount of this movement, the cylinder rack 17 and the rotary body 19 are necessarily needed. Thus, even when the sliding of the first pinion gear 14 and the torques applied to the input shaft 11 and the output shaft 12 are detected according to the amount of this movement, it is possible to obtain the same effects as those of the above embodiment.

Further, in the torque sensor 10 according to the above embodiment, the case where a GMR element constitutes the detecting element 20 is shown. However, the constitution of the detecting element 20 is not limited thereto, and can be suitably changed. For example, other magnetoelectric conversion elements, such as an MR element and a Hall element may constitute the detecting element. Even when such changes have been made, it is possible to obtain the same effects as those of the above embodiment. [Brief Description of the Drawings]

## Claims

1. A torque sensor comprising:
an input shaft (11) that is provided with an input gear (11 b);
an output shaft (12) that is connected with the input shaft (12) and is provided with an output gear (12a);
a first pinion gear (14) that meshes with the input gear (11 b);
a second pinion gear (15) that meshes with the output gear (12b);
**characterized in that**
the torque sensor further comprises a helical gear (16) extending from the second pinion gear (12b), and **in that**
the first pinion gear (14) is mounted on the helical gear (16) and is slid according to a difference in the angle of rotation between the input shaft (11) and the output shaft (12), and the torques applied to the input shaft (11) and the output shaft (12) are detected according to the amount of movement of the first pinion gear (14).

2. The torque sensor according to Claim 1, further comprising a rack (17) extending from the first pinion gear (14), and a rotary body (19) that is engaged with the rack (17) and is rotated according to the sliding of the first pinion gear (14),
wherein the torques are detected according to the amount of rotation of the rotary body (19).

3. The torque sensor according to Claim 2,
wherein the amount of rotation of the rotary body (19) is detected by assembling a magnet (22) into the rotary body (19) and detecting the rotation of the magnet (22).

4. The torque sensor according to any one of Claims 1 to 3,
wherein the first pinion gear (14) is biased in a constant direction.

5. The torque sensor according to Claim 4,
wherein the first pinion gear (14) is biased via the rack (17) by the rotary body (19).

## Patentansprüche

1. Drehmomentsensor, aufweisend:
eine Eingangswelle (11), die mit einem Eingangszahnrad (11 b) versehen ist;
eine Ausgangswelle (12), die mit der Eingangswelle (12) verbunden ist und
mit einem Ausgangszahnrad (12a) versehen ist;
ein erstes Ritzel (14), das mit dem Eingangszahnrad (11 b) kämmt;
ein zweites Ritzel (15), das mit dem Ausgangszahnrad (12b) kämmt;
**dadurch gekennzeichnet,**
**dass** der Drehmomentsensor ferner ein schrägverzahntes Zahnrad (16) aufweist, das sich von dem zweiten Ritzel (12b) weg erstreckt, und
**dass** das erste Ritzel (14) an dem schrägverzahnten Zahnrad (16) angebracht ist und in Abhängigkeit von einer Differenz bei dem Rotationswinkel zwischen der Eingangswelle (11) und der Ausgangswelle (12) verschoben wird und die auf die Eingangswelle (11) und die Ausgangswelle (12) aufgebrachten Drehmomente in Abhängigkeit von dem Bewegungsausmaß des ersten Ritzels (14) festgestellt werden.

2. Drehmomentsensor nach Anspruch 1,
der weiterhin eine sich von dem ersten Ritzel (14) weg erstreckende Zahnstange (17) sowie einen Drehkörper (19) aufweist, der mit der Zahnstange (17) in Eingriff steht und in Abhängigkeit von der Verschiebung des ersten Ritzels (14) rotationsmäßig bewegt wird,
wobei die Drehmomente in Abhängigkeit von dem Rotationsausmaß des Drehkörpers (10) festgestellt werden.

3. Drehmomentsensor nach Anspruch 2,
wobei das Rotationsausmaß des Drehkörpers (19) unter Anbringen eines Magneten (22) in dem Drehkörper (19) und Erfassen der Rotation des Magneten (22) festgestellt wird.

4. Drehmomentsensor nach einem der Ansprüche 1 bis 3,
wobei das erste Ritzel (14) in einer konstanten Richtung vorgespannt ist.

5. Drehmomentsensor nach Anspruch 4,
wobei das erste Ritzel (14) über die Zahnstange (17) durch den Drehkörper (19) vorgespannt ist.

## Revendications

1. Capteur de couple comprenant :
un arbre d'entrée (11) qui est muni d'un pignon d'entrée (11b) ;
un arbre de sortie (12) qui est relié à l'arbre d'entrée (11) et est muni d'un pignon de sortie (12b) ;
une première roue dentée (14) qui s'engrène avec le pignon d'entrée (11b) ;
une deuxième roue dentée (15) qui s'engrène avec le pignon de sortie (12b) ;
**caractérisé en ce que**
le capteur de couple comprend en outre une roue hélicoïdale (16) qui s'étend depuis la deuxième roue dentée (15), et **en ce que**
la première roue dentée (14) est montée sur la roue hélicoïdale (16) et est déplacée par glissement en fonction d'une différence d'angle de rotation entre l'arbre d'entrée (11) et l'arbre de sortie (12), et les couples appliqués à l'arbre d'entrée (11) et à l'arbre de sortie (12) sont détectés en fonction de la valeur de déplacement de la première roue dentée (14).

2. Capteur de couple selon la revendication 1, comprenant en outre une crémaillère (17) s'étendant depuis la première roue dentée (14), et un corps rotatif (19) qui est en prise avec la crémaillère (17) et est mis en rotation en fonction du glissement de la première roue dentée (14),
dans lequel les couples sont détectés en fonction de la valeur de rotation du corps rotatif (19).

3. Capteur de couple selon la revendication 2,
dans lequel la valeur de rotation du corps rotatif (19) est détectée par l'assemblage d'un aimant (22) dans le corps rotatif (19) et par la détection de la rotation de l'aimant (22).

4. Capteur de couple selon l'une quelconque des revendications 1 à 3,
dans lequel la première roue dentée (14) est sollicitée dans une direction constante.

5. Capteur de couple selon la revendication 4,
dans lequel la première roue dentée (14) est sollicitée via la crémaillère (17) par le corps rotatif (19).
